# EUROPEAN PATENT APPLICATION

(11) **EP 4 756 351 A1**
(43) Date of publication of application: **10.06.2026**
(21) Application number: 24848632.6
(22) Date of filing: 14.05.2024
(51) Int. Cl.: F28F 13/04, F22D 1/02, F28B 1/02

(54) **ECONOMIZER AND BOILER**

(30) Priority: 03.08.2023 JP 2023127187
(71) Applicant: Kurita Water Industries Ltd., Tokyo 164-0001 (JP)
(72) Inventor: UCHIDA, Kazuyoshi, Tokyo 164-0001 (JP); MORI, Shintarou, Tokyo 164-0001 (JP)
(74) Representative: TBK
(86) International application number: PCT/JP2024/017766
(87) International publication number: WO 2025/027971

(57) **Abstract**

Provided is an economizer in which a heat transfer pipe (2) for heating feedwater is arranged within a housing (1) through which exhaust gas flows, the economizer comprising a nozzle (3) that supplies a dropwise condensation promotor to a latent heat recovery section in which condensed water is generated on the surface of the heat transfer pipe. The nozzle (3) is disposed so as to supply the dropwise condensation promotor to a region where the surface temperature of the heat transfer pipe is less than or equal to the thermal decomposition temperature of the dropwise condensation promotor. The dropwise condensation promotor comprises at least one among a sarcosine compound and a long-chain aliphatic amine.

## Description

### Technical Field

The present invention relates to an economizer that heats boiler feedwater or the like with exhaust gas from a boiler or the like, and particularly relates to a type of economizer that also heats feedwater with condensation heat (latent heat) of water vapor in the exhaust gas. The present invention also relates to a boiler including this economizer.

### Related Art

As an economizer that heats feedwater with exhaust gas from a boiler or the like, there is one that heats feedwater with sensible heat of the exhaust gas and further heats feedwater with latent heat (condensation heat) (Patent Documents 1 and 2).

Patent Document 1 describes providing a means for changing an exhaust gas temperature between a dry economizer for sensible heat recovery and a condensing economizer for latent heat recovery.

Patent Document 2 describes that, in an economizer in which finned tubes are used as heat transfer pipes, sensible heat is recovered by an upstream finned tube, and latent heat is recovered by a downstream finned tube, an interval between fins of the downstream finned tube is increased and dropping of condensed water is facilitated.

Methods for bringing steam into contact with a solid wall whose temperature is lower than that in a saturation state and liquefying and condensing the steam include: filmwise condensation, in which a condensed liquid continuously forms a liquid film on the wall surface; and dropwise condensation, in which a condensed liquid forms a large number of liquid drops on the wall surface without wetting the same. Since dropwise condensation exhibits a heat transfer rate several times to several tens of times higher than that of filmwise condensation, a dropwise condensation agent may be used in condensing steam (Patent Document 3).

### Prior Art Documents

### Patent Documents

Patent Document 1: Japanese Patent Laid-Open No. 2012-57860
Patent Document 2: Japanese Patent Laid-Open No. 2013-108643
Patent Document 3: Japanese Patent No. 6506865

### SUMMARY OF INVENTION

### Technical Problem

When a dropwise condensation promoter is added to exhaust gas introduced into an economizer, depending on temperature conditions, much of the dropwise condensation promoter may be decomposed by the heat of the exhaust gas, and heat recovery efficiency in a latent heat recovery section of the economizer may be less likely to be improved.

The present invention addresses improving the heat recovery efficiency in a latent heat recovery section of an economizer.

### Solution to Problem

An economizer of the present invention is characterized in that, in an economizer in which a heat transfer pipe for feedwater heating is arranged in an exhaust gas passage section through which exhaust gas flows, the economizer includes a dropwise condensation promoter supply part that supplies a dropwise condensation promoter to a latent heat recovery section where condensed water is generated on a surface of the heat transfer pipe.

In one aspect of the present invention, the dropwise condensation promoter supply part is arranged so as to supply the dropwise condensation promoter to a region where a temperature of the surface of the heat transfer pipe is equal to or lower than a thermal decomposition temperature of the dropwise condensation promoter.

In one aspect of the present invention, the dropwise condensation promoter supply part includes a supply amount control part that controls a supply amount of the dropwise condensation promoter according to fuel consumption of a boiler that generates the exhaust gas.

In one aspect of the present invention, the dropwise condensation promoter includes at least one of a sarcosine compound and a long-chain aliphatic amine.

A boiler of the present invention includes the economizer of the present invention.

### Effects of Invention

In the economizer of the present invention, by adding the dropwise condensation promoter to the latent heat recovery section of the economizer, dropwise condensation of water vapor is promoted in the latent heat recovery section, and heat recovery efficiency in the latent heat recovery section is improved.

### BRIEF DESCRIPTION OF THE DRAWINGS

FIG. 1 is a cross-sectional view of an economizer according to an embodiment.
FIG. 2 is a cross-sectional view of an economizer according to another embodiment.
FIG. 3 is a perspective view of a heat transfer pipe of the economizer of FIG. 2.

### DESCRIPTION OF THE EMBODIMENTS

Hereinafter, embodiments will be described with reference to the drawings.

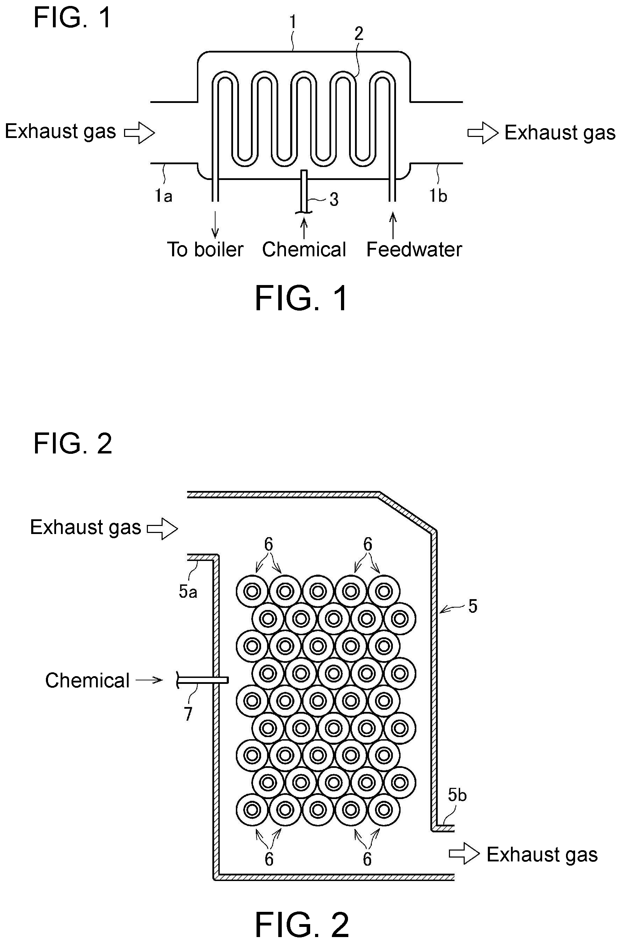

FIG. 1 is a schematic cross-sectional view of an economizer installed in an exhaust gas flue of a boiler. In the economizer, a heat transfer pipe 2 made of metal is arranged in a housing 1. Combustion exhaust gas from the boiler flows into the housing 1 from an inlet 1a on one end side of the housing 1, contacts the heat transfer pipe 2 and falls in temperature, and then flows out from an outlet 1b on the other end side of the housing 1.

Boiler feedwater is introduced into the heat transfer pipe 2 from a downstream side (outlet 1b side) in an exhaust gas flow direction, and heated feedwater is taken out from an upstream side in the exhaust gas flow direction.

In the heat transfer pipe 2, provided on the upstream side in the gas flow direction is a sensible heat recovery section, and provided on the downstream side in the gas flow direction is a latent heat recovery section. The latent heat recovery section is a region where a surface temperature (hereinafter sometimes referred to as metal temperature of heat transfer pipe) of the heat transfer pipe 2 is 100 °C or lower, and a chemical injection nozzle 3 is provided so as to supply a dropwise condensation promoter as a chemical to this region. By supplying the dropwise condensation promoter from the chemical injection nozzle 3, heat recovery efficiency in the latent heat recovery section is improved.

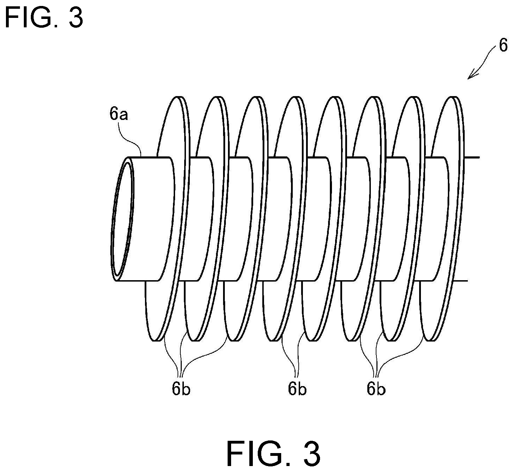

FIG. 2 is a cross-sectional view of an economizer according to another embodiment, and FIG. 3 is a perspective view of a heat transfer pipe thereof.

A heat transfer pipe 6 is installed in a housing 5 installed in an exhaust gas flue of a boiler. As shown in FIG. 3, the heat transfer pipe 6 is composed of a fin tube including a heat transfer pipe body 6a of a tubular shape and fins 6b of a disk shape provided to extend radially from an outer peripheral surface of the heat transfer pipe body 6a.

The exhaust gas flows into the housing 5 from an exhaust gas inlet 5a provided on one end side of the housing 5, contacts the heat transfer pipe 6 and falls in temperature, and then flows out from an outlet 5b provided on the other end side of the housing 5.

The heat transfer pipe 6 is arranged in multiple stages and multiple rows such that a pipe axis direction of the heat transfer pipe body 6a is orthogonal to a direction connecting the inlet 5a and the outlet 5b.

In this embodiment as well, a chemical injection nozzle 7 is installed so as to supply a dropwise condensation promoter to the latent heat recovery section on the downstream side in the gas flow direction.

By supplying the dropwise condensation promoter from the chemical injection nozzle 7 to the latent heat recovery section, the heat recovery efficiency in the latent heat recovery section is improved.

In the case where the dropwise condensation promoter has a thermal decomposition temperature of lower than 100 °C, it is preferable that the chemical injection nozzles 3 and 7 are provided so as to supply the dropwise condensation promoter to a region in the latent heat recovery section where the metal temperature of the heat transfer pipes 2 and 6 is equal to or lower than the thermal decomposition temperature. Conversely, in the case where the dropwise condensation promoter has a thermal decomposition temperature of higher than 100 °C, the chemical injection nozzles 3 and 7 may be installed so as to supply the dropwise condensation promoter to the sensible heat recovery section on the upstream side of the latent heat recovery section.

Multiple chemical injection nozzles may be installed at different installation positions. In this case, the chemical injection nozzle used for chemical injection may be switched according to the operating conditions of the boiler or the thermal decomposition temperature of the dropwise condensation promoter.

In the present invention, a dropwise condensation promoter may be added to the exhaust gas, for which a distribution ratio (concentration of the dropwise condensation promoter in the gas phase/in the water phase) at each temperature, adsorption characteristics for each metal, and decomposition characteristics at each temperature have been studied in advance, so that the dropwise condensation promoter is adsorbed on a heat transfer pipe surface (metal surface) even in the case where the pH of condensed water is on the acidic side. For example, as shown in Table 1 below, an optimal dropwise condensation promoter may be selected, and one that maximizes the latent heat recovery promotion effect may be selected. The applicable fuel may include ammonia co-firing partially using ammonia, in addition to those described in Table 1.

In a general small boiler, for example, an exhaust gas temperature at an economizer inlet is 200 °C to 300 °C, and the exhaust gas temperature at an economizer outlet decreases to around a temperature of the boiler feedwater through a temperature range of the latent heat recovery section. In that case, it is preferable to select a dropwise condensation promoter that does not decompose extremely even at 200 °C to 300 °C according to the material of the heat transfer pipe surface. For example, the dropwise condensation promoter is preferably at least one of a sarcosine compound and a long-chain aliphatic amine.

In a gas fired boiler, generally, since the fuel has a low sulfur content, the condensed water has a low acidity. Accordingly, not only a heat transfer pipe made of stainless steel but a heat transfer pipe made of carbon steel may be used in areas other than a region (latent heat recovery section) where condensed water is generated. The region where condensed water is generated may change due to fluctuations in feedwater temperature. Accordingly, in the case of an economizer provided with a heat transfer pipe made of carbon steel, oleyl propylene diamine, which is likely to be adsorbed on carbon steel under weakly acidic conditions, is preferably used as the dropwise condensation promoter. Furthermore, it is more preferable to use a sarcosine compound in combination with oleyl propylene diamine in order to also accommodate the generation of condensed water on a heat transfer pipe made of stainless steel. In this case, the usage is economically applicable without using an alkaline agent in combination, but an alkaline agent may be added according to the water quality of the condensed water. The alkaline agent may be a volatile amine, NH₃, NaOH, phosphate, or the like. The volatile amine may be, for example, ethanolamine being an amine that is likely to dissolve in condensed water and has low volatility.

In a heavy oil fired boiler, since sulfuric acid is generated due to the sulfur content in the fuel, the acidity of the condensed water is likely to be increased. Hence, corrosion-resistant stainless steel (SUS316L) or the like may be used as a material of the heat transfer pipe. In the case of an economizer provided with a heat transfer pipe made of stainless steel, a sarcosine compound is preferable as the dropwise condensation promoter. In the case where the acidity is increased due to fuel properties or where a dropwise condensation promoter other than the sarcosine compound is used, the above alkaline agent may be used in combination to achieve an optimal pH range through adjustment.

In a hydrogen boiler having a high flame temperature, since thermal NOx is generated from nitrogen in the atmosphere and is oxidized to generate nitric acid at high concentrations, the condensed water has a high acidity. Accordingly, corrosion-resistant stainless steel or the like may be used as a material of the heat transfer pipe. In this case, a sarcosine compound is preferable as the dropwise condensation promoter. In the case where the condensed water has an extremely low pH, a change occurs in the adsorption characteristics. Hence, it is preferable to maintain the condensed water in an optimal pH range for the dropwise condensation promoter to be used by using the above alkaline agent in combination.

In any of the above boilers, the above alkaline agent may be added together with the dropwise condensation promoter, may be added separately, or may be added by spraying boiler blowdown water containing the alkaline agent.

**[Table 1]**

| Applicable fuel | Fuel characteristics | Material of heat transfer tube of economizer | Water quality of condensed water | Optimal droplet condensation promoter |
|---|---|---|---|---|
| For gas fired boilers | Low S content, high C content, exhaust gas contains a lot of CO₂ | SUS (partially carbon steel) + finned aluminum | Weakly acidic | Carbon steel: oleyl propylene diamine SUS: sarcosine compound |
| For heavy oil fired boilers | High S content, high C content, exhaust gas contains a lot of CO₂ and S | SUS | Strongly acidic | Sarcosine compound |
| For hydrogen boilers | Low C/S content, nitric acid derived from thermal NOx is present | SUS | Strongly acidic | Sarcosine compound (alkali added as needed) |

The surface of the heat transfer pipe may be subjected to water repellent finishing. The water repellent finishing may be, for example, coating the surface of the heat transfer pipe with a highly water-repellent material such as polytetrafluoroethylene (PTFE) being a fluororesin, or silicon, and forming a resin layer, or performing physical machining to provide the surface of the heat transfer pipe with an uneven structure imitating a lotus leaf.

The dropwise condensation promoter used in the present invention preferably includes at least one of a sarcosine compound and a long-chain aliphatic amine.

As the sarcosine compound, N-oleoyl sarcosine, N-lauroyl sarcosine, N-stearoyl sarcosine, N-cocoyl sarcosine, and the like are preferable.

As the long-chain aliphatic amine, octadecylamine, oleylamine, oleyl propylene diamine, and the like are preferable.

The amount of the dropwise condensation promoter added may be any value sufficient to achieve an effect of promoting dropwise condensation on the surface of the heat transfer pipe of the latent heat recovery section. The amount added varies depending on the type of the dropwise condensation promoter, but is usually preferably 0.01 to 10 mg/kg, particularly about 0.1 to 1 mg/kg, relative to the amount of condensed water generated in the exhaust gas. This amount of the dropwise condensation promoter added may be adjusted according to (for example, in proportion to) the fuel consumption of the boiler.

The dropwise condensation promoter may be added intermittently or continuously. However, continuous addition is preferable.

The dropwise condensation promoter may be dissolved or dispersed in a solvent such as water, methanol, ethanol, isopropanol, or the like and supplied to the chemical injection nozzles 3 and 7. For example, a solution of the dropwise condensation promoter is stored in a tank in advance, and this dropwise condensation promoter solution is supplied to the chemical injection nozzle 3 or 7 by a pump. For uniform supply by the chemical injection nozzle, a spray tip may be installed at a nozzle tip. In the case of installing an orifice-type spray tip, in order to adjust the liquid delivery pressure and flow rate of the dropwise condensation promoter solution to a range suitable for the spray tip, the dropwise condensation promoter solution may be separately diluted and supplied to the economizer. The dropwise condensation promoter solution may be diluted with filtered boiler blowdown water or economizer condensed water, and pressurized or the like, and be made suitable for spraying. As described above, the liquid delivery amount of this pump may be controlled according to the fuel consumption of the boiler.

Although the present invention has been described in detail using specific aspects, it will be apparent to those skilled in the art that various modifications can be made without departing from the spirit and scope of the present invention.
The present application is based on Japanese Patent Application No. 2023-127187 filed on August 3, 2023, the entire contents of which are incorporated herein by reference.

### Description of Reference Numerals

- 1, 5: housing
- 2 and 6: heat transfer pipe
- 3 and 7: chemical injection nozzle

## Claims

1. An economizer, in which a heat transfer pipe for feedwater heating is arranged in an exhaust gas passage section through which exhaust gas flows, the economizer comprising:
a dropwise condensation promoter supply part, supplying a dropwise condensation promoter to a latent heat recovery section where condensed water is generated on a surface of the heat transfer pipe.

2. The economizer according to claim 1, wherein the dropwise condensation promoter supply part is arranged to supply the dropwise condensation promoter to a region where a temperature of the surface of the heat transfer pipe is equal to or lower than a thermal decomposition temperature of the dropwise condensation promoter.

3. The economizer according to claim 1, wherein the dropwise condensation promoter supply part comprises a supply amount control part that controls a supply amount of the dropwise condensation promoter according to fuel consumption of a boiler that generates the exhaust gas.

4. The economizer according to any one of claims 1 to 3, wherein the dropwise condensation promoter includes at least one of a sarcosine compound and a long-chain aliphatic amine.

5. A boiler, comprising the economizer according to any one of claims 1 to 4.
